## Europäisches Patentamt

## European Patent Office

## Office européen des brevets

(19)

(11) Veröffentlichungsnummer: **0 025 174**
**B1**

(12)
# EUROPÄISCHE PATENTSCHRIFT

(45) Veröffentlichungstag der Patentschrift:
**18.03.87**

(21) Anmeldenummer: **80105067.5**

(22) Anmeldetag: **26.08.80**

(51) Int. Cl.⁴: **G 01 C 3/08**

(54) **Schaltung zur sensorgesteuerten Entfernungsmessung.**

(30) Priorität: **10.09.79 DE 2936535**

(43) Veröffentlichungstag der Anmeldung:
**18.03.81 Patentblatt 81/11**

(45) Bekanntmachung des Hinweises auf die Patenterteilung:
**18.03.87 Patentblatt 87/12**

(84) Benannte Vertragsstaaten:
**BE FR GB IT NL**

(56) Entgegenhaltungen:
**DE-A-2 800 451**
**FR-A-2 377 024**
**US-A-4 004 852**

(73) Patentinhaber: **Siemens Aktiengesellschaft Berlin und München, Wittelsbacherplatz 2, D-8000 München 2 (DE)**

(72) Erfinder: **Herbst, Heiner, Dr., Anechostrasse 29a, D-8000 München 82 (DE)**
Erfinder: **Pfleiderer, Hans-Jörg, Dr., Franz-Krinninger-Weg 23, D-8011 Zorneding (DE)**
Erfinder: **Grassl, Hans-Peter, Dipl.-Phys., Regina-Ullmann-Strasse 34, D-8000 München 81 (DE)**

EP 0 025 174 B1

## Beschreibung

Die Erfindung bezieht sich auf eine Schaltung zur sensorgesteuerten Entfernungsmessung nach dem Oberbegriff des Patentanspruchs 1.

Eine Schaltung dieser Art ist in der US-A-4 004 852 beschrieben. Dabei besteht die Bewertungseinrichtung aus einem Bewerter, der allen Sensorelementen nachgeschaltet ist. Die einzelnen Sensorsignale werden sequentiell ausgelesen, in diesen Bewerter seriell eingegeben, digitalisiert und sodann den beiden Schieberegistern zugeführt. Das sequentielle Auslesen und Digitalisieren der Sensorsignale führt aber zu einer ganz beträchtlichen Meßdauer, die für viele Anwendungsfälle zu groß ist.

Der Erfindung liegt die Aufgabe zugrunde, eine Schaltung der eingangs genannten Art anzugeben, die eine wesentlich schnellere, aber dennoch sehr genaue Digitalisierung der Sensorsignale und damit eine genaue Auswertung der maximalen Korrelation der Sensorsignale ermöglicht. Diese Aufgabe wird durch eine Ausbildung der Schaltung nach dem kennzeichnenden Teil des Patentanspruchs 1 gelöst.

Der mit der Erfindung erzielbare Vorteil besteht insbesondere darin, daß die Bewerter im gesperrten Zustand der Transfertransistoren von den Stufen der Schieberegister vollständig getrennt sind, so daß sie unabhängig von den Kennwerten einzelner Schaltungsteile des Schieberegisters, die mit herstellungsbedingten Toleranzen behaftet sind, auf vorgegebene Spannungswerte rückgesetzt werden können, die zu Beginn der Integrationszeiten für die Sensorelemente an einem oder mehreren Schaltungspunkten der Bewertungseinrichtung mit ausreichender Genauigkeit vorliegen. Aber auch die Toleranzen der in den einzelnen Bewertern enthaltenen Bauelemente bringen keine Genauigkeitseinbuße mit sich, da sämtliche Bewerter digital arbeiten und mit einer vorgegebenen Referenzspannung und einer vorgegebenen Versorgungsspannung beaufschlagt sind.

Aus der DE-A-28 00 451 ist eine weitere Schaltung zur sensorgesteuerten Entfernungsmessung mit zwei linearen Bildsensoren bekannt, bei der jedem der Bildsensoren ein digitaler Bewerter nachgeschaltet ist. Die aus dem ersten Bildsensor sequentiell ausgelesenen Sensorsignale werden in dem ersten Bewerter nacheinander digitalisiert und über ein Hilfsschieberegister und diesem nachgeordnete Gatterschaltungen einem ersten Schieberegister seriell zugeführt, während die aus dem zweiten Bildsensor sequentiell ausgelesenen Sensorsignale über weitere Gatterschaltungen einem zweiten Schieberegister seriell mitgeteilt werden. Auch hier ergibt sich wegen der seriellen Eingabe in jedes der beiden Schieberegister und zusätzlich wegen der Funktion des Hilfsschieberegisters eine beträchtliche Meßdauer.

Die Ansprüche 2 bis 9 sind auf bevorzugte Ausgestaltungen und Weiterbildung der Schaltung nach der Erfindung gerichtet. Der Anspruch 10 betrifft eine vorteilhafte Verwendung der erfindungsgemäßen Schaltung. Nachfolgend wird die Erfindung anhand der in der Zeichnung dargestellten Ausführungsbeispiele näher erläutert. Dabei zeigt:

Fig. 1 ein erstes Ausführungsbeispiel,
Fig. 2 eine Teilschaltung von Fig. 1,
Fig. 3 Spannungs-Zeit-Diagramme zur Erläuterung der Figuren 1 und 2,
Fig. 4 bis 6 alternative Ausgestaltungen einer Teilschaltung von Fig. 1,
Fig. 7 ein zweites Ausführungsbeispiel und
Fig. 8 ein drittes Ausführungsbeispiel der Erfindung.

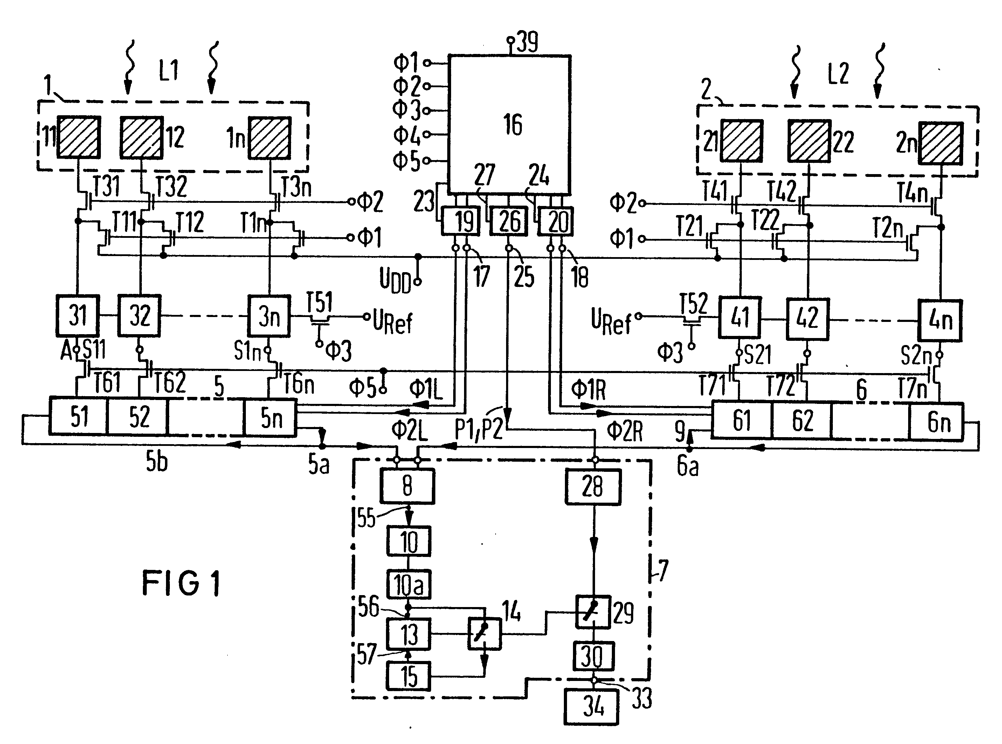

Die in Fig. 1 dargestellte Schaltung enthält zwei lineare Bildsensoren 1 und 2, die mit Sensorelementen 11, 12...1n und 21, 22...2n bestückt sind. Die Bildsensoren 1, 2 sind auf einem dotierten Halbleiterkörper eines ersten Leitfähigkeitstyps integriert. Werden die Sensorelemente als Fotodioden realisiert, so stellen die schraffierten Rechtecke an einer Grenzfläche des Halbleiterkörpers angeordnete Bereiche eines zu dem ersten entgegengesetzten, zweiten Leitfähigkeitstyps dar. Die Sensorelemente 11...1n und 21...2n sind über individuell zugeordnete Schalttransistoren T11...T1n und T31...T3n sowie T21...T2n und T41...T4n mit einem Anschluß verbunden, der mit einer Versorgungsspannung $U_{DD}$ beschaltet ist. Die Gateelektroden der Schalttransistoren T11...T1n und T21...T2n sind jeweils an einen gemeinsamen Anschluß geführt, dem eine Taktimpulsspannung Ø1 zugeführt wird, während die Gateelektroden der Schalttransistoren T31...T3n und T41...T4n mit Anschlüssen verbunden sind, die an einer Impulsspannung Ø2 liegen.

Die Sensorelemente 11...1n und 21...2n sind über die Schalttransistoren T31...T3n und T41...T4n mit den Eingängen von Bewertern 31...3n und 41...4n verbunden.

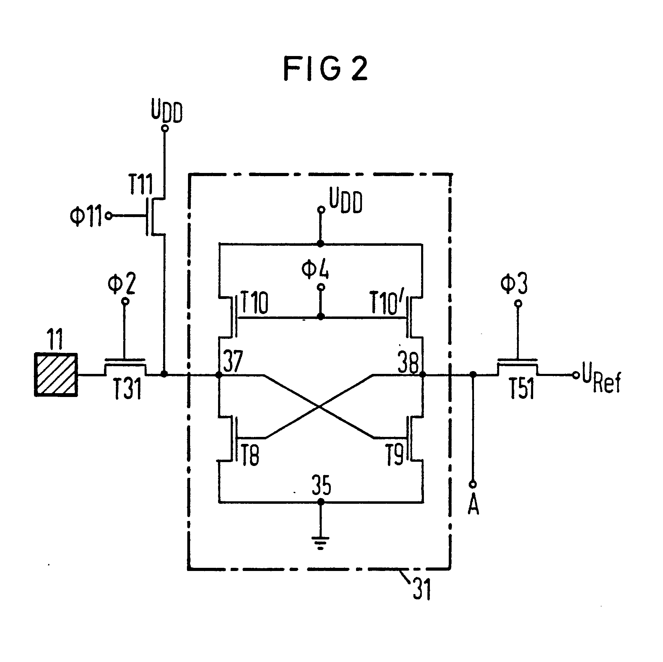

Eine zweckmäßige schaltungstechnische Durchbildung der Bewerter 31...3n und 41...4n soll anhand der Fig. 2 noch näher beschrieben werden. Weitere Eingänge dieser Bewerter sind über gemeinsame Schalttransistoren T51 und T52, deren Gateelektroden mit einer Taktimpulsspannung Ø3 beschaltet sind, an Anschlüsse geführt, die am einer Referenzspannung $U_{Ref}$ liegen. Die Bewerter 31...3n und 41...4n können in Abhängigkeit von den Spannungen, die ihnen über die Schalttransistoren T31...T3n und T41...4n zugeführt werden, einen von zwei möglichen Schaltzuständen einnehmen. Ihre an A abgreifbaren Ausgangssignale S11...S1n und S21...S2n, die je nach dem eingenommenen Schaltzustand dem logischen Spannungspegel "1" oder "0" entsprechen, werden über Transfertransistoren T61...T6n und T 71...T7n, deren Gateelektroden mit einer gemeinsamen Taktimpulsspannung Ø5 beaufschlagt sind, den Eingängen der einzelnen Stufen 51, 52...5n und 61, 62...6n zweier den Bildsensoren individuell zugeordneter Schieberegister 5 und 6 zugeführt, die vorzugsweise als zweiphasige, dynamische Schieberegister ausgebildet sind. Das Schieberegister 5 weist zwei Eingänge auf, die mit Taktimpulsspannung Ø1L und Ø2L beschaltet sind, während das Schieberegister 6 zwei Eingänge besitzt, denen die Taktimpulsspannung Ø1R und Ø2R zugeführt werden. Der Ausgang 5a der Stufe 5n ist einerseits über eine Leitung 5b mit dem Eingang der Stufe 51 verbunden und andererseits an einen ersten Eingang einer in einem Auswerteteil 7 angeordneten logischen Schaltung 8. Der Ausgang 6a der Stufe 6n ist in entsprechender Weise über eine Leitung 9 an den Eingang der Stufe 61 geführt und andererseits mit einem zweiten Eingang von 8 verbunden.

Der logischen Schaltung 8 ist ein Zähler 10 nachgeschaltet, dessen Ausgang über einen Speicher 10a mit dem ersten Eingang eines digitalen Komparators 13 und über einen elektronischen Schalter 14 mit einem Speicher 15 verbunden ist. Der Ausgang des Speichers 15 ist an einen zweiten Eingang des digitalen Komparators 13 geführt.

Ein Taktimpulsgeber 16 ist mit AusgÄngen für die Taktimpulsspannungen Ø1 bis Ø3 und Ø5 versehen. Über weitere Ausgänge 17 und 18 werden die Taktimpulsspannungen Ø1L und Ø2L sowie Ø1R und Ø2R abgegeben, wobei in Serie zu den Ausgängen 17 eine Torschaltung 19 und in Serie zu den Ausgängen 18 eine Torschaltung 20 angeordnet sind. Die Steuereingänge von 19 und 20 werden über Leitungen 23 und 24 mit noch näher zu beschreibenden Steuersignalen beaufschlagt. Der Taktimpulsgeber weist einen weiteren Ausgang 25 auf, zu dem eine weitere Torschaltung 26 in Serie angeordnet ist. Diese wird über eine Leitung 27 mit einem weiteren Steuersignal belegt. Der Ausgang 25 ist mit dem Eingang eines Zählers 28 verbunden, dessen Ausgang über einen elektronischen Schalter 29 mit einem Speicher 30 in Verbindung steht. Der Ausgang 33 des Speichers 30 ist mit einer weiter unten beschriebenen Vorrichtung 34 beschaltet.

Fig. 2 zeigt eine zweckmäßige Ausgestaltung der Bewerter 31...3n und 41...4n anhand des Bewerters 31. Er besteht aus einer Flip-Flop-Schaltung mit den Schalttransistoren T8 und T9 und den als schaltbare Lastelemente betriebenen Transistoren T10 und T10'. Die Source-Anschlüsse von T8 und T9 sind über einen gemeinsamen Anschluß 35 an das Bezugspotential der Schaltung angeschlossen, die Drainanschlüsse von T10 und T10' über einen gemeinsamen Anschluß an die Versorgungsspannung $U_{DD}$. Der Eingangsknoten des Bewerters 31 ist mit 37 bezeichnet, der mit dem Ausgang A verbundene Ausgangsknoten mit 38. Zwischen den Gateelektroden von T8 und T9 und den Knoten 37 und 38 besteht eine Kreuzkopplung. Die Gateelektroden von T10 und T10' sind über einen gemeinsamen Anschluß mit einer Taktimpulsspannung Ø4 beschaltet. Die an die Knoten 37 und 38 angeschlossenen Schaltungsteile T11, 11 und T31 sowie T51 wurden bereits anhand der Fig. 1 beschrieben.

Das bei der Erfindung verwendete Prinzip der Entfernungsmessung eines Gegenstandes geht davon aus, daß von diesem über zwei optische Einrichtungen zwei getrennte Abbildungen gewonnen werden, deren entfernungsabhängige Relativpositionen ausgewertet werden. Die Lichtstrahlen L1 in Fig. 1 gehen dabei von dem in seiner Entfernung zu bestimmenden Gegenstand aus. Sie projizieren über eine erste optische Einrichtung eine Abbildung desselben in der Weise auf die Ebene des Bildsensors 1, daß dieser auf einen Zeilenausschnitt der Abbildung ausgerichtet ist. In analoger Weise projizieren die Lichtstrahlen L2, die über eine zweite optische Einrichtung von dem Gegenstand gewonnen werden, eine zweite Abbildung desselben auf die Ebene des Bildsensors 2, und zwar derart, daß dieser auf den gleichen Zeilenausschnitt gerichtet ist, wenn sich der Gegenstand in einem vorgegebenen Abstand, z.B. im Abstand "unendlich" befindet. Verändert sich der Abstand des Gegenstandes gegenüber dem vorgegebenen Wert, so verschieben sich die auf die Bildsensoren 1 und 2 projizierten Zeilenausschnitte dementsprechend in Längsrichtung der Bildsensoren. Die Größe der gegenseitigen Verschiebung stellt dabei ein Maß für die tatsächliche Entfernung des Gegenstandes dar. Eine ähnliche Methode der Entfernungsmessung, bei der die vorstehend beschriebenen relativen Verschiebungen zweier Abbildungen des Gegenstandes ausgenutzt werden, aber anstelle von linearen Bildsensoren flächenhafte Anordnungen von Fotodioden vorgesehen sind, ist beispielsweise aus der Zeitschrift "Electronics" vom 10.11.1977, Seiten 40 bis 44, bekannt.

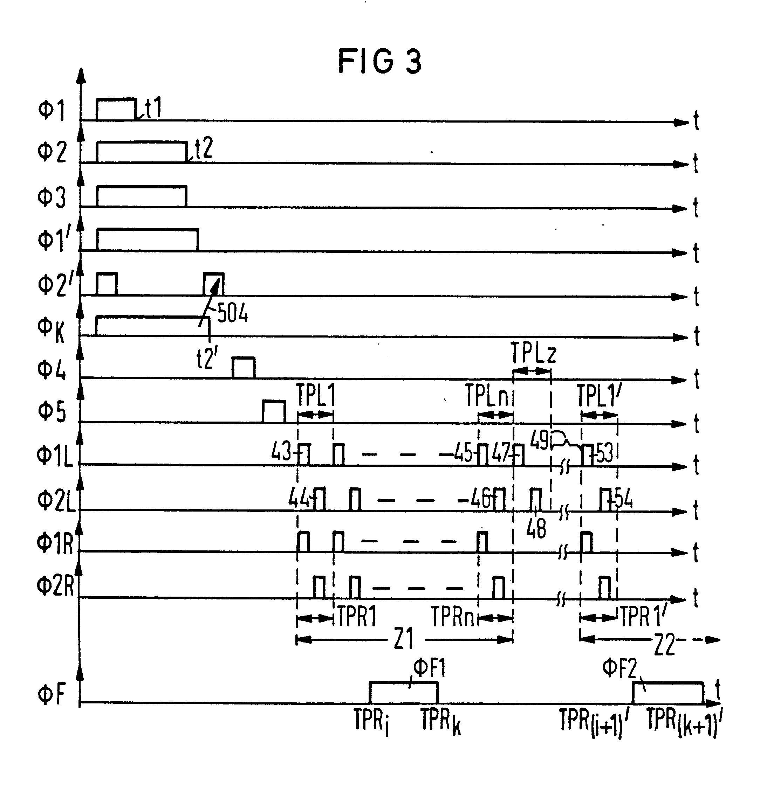

Die Wirkungsweise der Schaltung nach den Figuren 1 und 2 ergibt sich in Verbindung mit den Impuls-Zeit-Diagrammen nach Fig. 3. Wird einem Eingang 39 des Taktimpulsgebers 16 ein Triggerimpuls zugeführt, so gibt dieser zunächst Taktimpulse Ø1 und Ø2 ab. Damit werden die Sensorelemente, z.B. 11, und die Eingangsknoten, z.B. 37, der Bewerter über die hierdurch leitend geschalteten Transistoren, z.B. T11 und T31, auf die Versorgungsspannung $U_{DD}$ rückgesetzt. Ein gleichzeitig beginnender Taktimpuls Ø3 schaltet T51 in den leitenden Zustand, so daß der Ausgangsknoten 38 auf die Referenzspannung $U_{Ref}$ gelegt wird. Beim Abschalten des Taktimpulses Ø1 beginnen sich in den Sensorelementen, z.B. 11, durch die einfallenden Lichtstrahlen L1 bzw. L2 erzeugte Ladungsträger anzusammeln, wobei in den Sensorelementen ein Spannungsabfall entsteht. Je größer die in den Sensorelementen 11...1n und 21...2n jeweils angesammelten, optisch erzeugten Ladungen sind, desto stärker verringert sich das Potential an den zugeordneten Eingangsknoten, z.B. 37, der Bewerter. Die Zeitspanne zwischen dem Ende des Taktimpulses Ø1 zum Zeitpunkt t1 und dem vorgegebenen Ende des Impulses Ø2 zum Zeitpunkt t2 wird als Integrationszeit bezeichnet. Nur innerhalb dieser Zeitspanne sammeln sich optisch erzeugte Ladungen in den Sensorelementen an. Nach Beendigung des Taktimpulses Ø2 und nach Beendigung des Taktimpulses Ø3 wird ein Taktimpuls Ø4 vom Taktimpulsgeber 16 an die Gateelektroden von T10 und T10′ gelegt, so daß die Flip-Flop-Schaltungen der Bewerter aktiviert werden. Am Ausgangsknoten, z.B. 38, stellt sich für den Fall, daß am Knoten 37 ein solcher Potentialabfall aufgetreten war, daß die Referenzspannung $U_{Ref}$ unterschritten wurde, eine Spännung ein, die etwa der Versorgungsspannung $U_{DD}$ entspricht (logische "1"). Wird dagegen $U_{Ref}$ durch die Spannung am Knoten 37 nicht unterschritten, so gelangt der Knoten 38 auf ein Potential, das etwa dem Bezugspotential am Anschluß 35 entspricht (logische "0"). Damit gibt jeder Bewerter ein digitalisiertes Sensorsignal, z.B. S 11, ab, dessen Wert abhängig ist vom Erreichen oder Nichterreichen einer Bezugsladung in den einzelnen Sensorelementen, die gerade dann vorliegt, wenn das Potential am Knoten 37 zum Zeitpunkt t2 dem Potential des auf die Spannung $U_{Ref}$ rückgesetzten Knotens 38 gleichkommt. Beim Auftreten eines Taktimpulses Ø5 werden dann die digitalisierten Sensorsignale, z.B. S11, den Eingängen der zugeordneten Stufen, z.B. 51, der Schieberegister 5 und 6 zugeführt und in diesen gespeichert.

Der Taktimpulsgeber 16 liefert anschließend Taktimpulsfolgen Ø1L, Ø2L, Ø1R und Ø2R, die die in den Stufen der Schieberegister 5 und 6 enthaltenen Informationen jeweils um eine Stufe verschieben. Vor dem Auftreten der Taktimpulse 43 und 44, die zu einer Taktperiode TPL1 gehören, erscheint das Sensorsignal S1n am Ausgang 5a. Die Taktimpulse 43 und 44 verschieben die Information S1n in die Stufe 51 und die Information S1(n-1) an den Ausgang 5a, und so weiter. Durch die Taktimpulse 45 und 46 der Taktperiode TPLn gelangt schließlich nach einem vollen Informationsumlauf wieder das Sensorsignal S1n an den Ausgang 5a. Es folgt eine Taktperiode TPLz mit den Taktimpulsen 47 und 48, durch die das Sensorsignal S1(n-1) am Ausgang 5a erscheint. Nach einer sich anschließenden, mit 49 bezeichneten Austastlücke schieben die Taktimpulse 53 und 54 der Taktperiode TPL1′ die Sensorsignale wieder um eine Stufe weiter, so daß S1(n-1) in die Stufe 51 gelangt und S1(n-2) an den Ausgang 5a durchgeschaltet wird.

In einem ersten Auslesezyklus Z1, der die Taktperioden TPL1 bis TPLn umfaßt, werden also die Sensorsignale S1n, S1(n-1) bis S1 und wieder S1n am Ausgang 5a seriell ausgegeben. In einem zweiten Auslesezyklus Z2, der die Taktperiode TPL1′ und n-1 weitere Taktperioden umfaßt, erfolgt eine zweite serielle Ausgabe aller Sensorsignale des Bildsensors 1, wobei die Signale S1(n-1), S1(n-2) bis S1 und wieder S1n und S1(n-1) an 5a auftreten. Innerhalb des ersten Auslesezyklus Z1 wird das Schieberegister 6 ebenfalls mit n Taktperioden TPR1 bis TPRn beaufschlagt, während den Taktimpulsen 47 und 48 entsprechende Impulse fehlen. Das hat zur Folge, daß zu Beginn von Z2 das Sensorsignal S2n am Ausgang 6a und das Signal S1(n-1) am Ausgang 5a anliegen.

Somit werden im ersten Auslesezyklus Z1 die Signalpaare S1n und S2n, S1(n-1) und S2(n-1) usw. an 5a und 6a seriell ausgelesen, im zweiten Auslesezyklus dagegen die Signalpaare S1(n-1) und S2n, S1(n-2) und S2(n-1) usw. Die seriell ausgelesenen Informationen der Schieberegister 5 und 6 sind also in zwei aufeinanderfolgenden Auslesezyklen um jeweils eine Signalbreite gegeneinander verschoben. Nach n Auslesezyklen haben sie dann wieder dieselbe zeitliche Zuordnung wie im Zyklus Z1. In Fig. 1 kann diese Verschiebung dadurch erreicht werden, daß die Torschaltung 20 über die Leitung 24 während des Auftretens der Taktimpulse 47 und 48, d.h. zwischen den Taktperioden TPRn und TPR1′, gesperrt wird. In diesem Zeitraum kann die Torschaltung 26 über die Steuerleitung 27 geöffnet werden, so daß einer der Impulse 47 oder 48 oder ein von diesen abgeleiteter Impuls am Ausgang 25 als Verschiebeimpuls P1 erscheint. Dieser Verschiebeimpuls P1 kennzeichnet dabei den Beginn eines neuen Auslesezyklus und eine gegenseitige Verschiebung der an den Ausgängen 5a und 6a seriell ausgelesenen Sensorsignale um jeweils eine Signalbreite.

Die innerhalb eines Auslesezyklus, z.B. Z1, ausgelesenen Sensorsignalpaare werden in der logischen Schaltung 8 nach der Exklusiv-Oder-Funktion bewertet. Dabei tritt am Ausgang 55 von 8 inner dann ein Ausgangsimpuls auf, wenn die eingangsseitig über 5a und 6a zugeführten digitalen Signale übereinstimmen gleichgültig, ob es sich um "1" - Signale oder "2" - Signale handelt. Stimmen sie nicht überein, so wird von 8 kein Ausgangsimpuls abgegeben. Die Teilschaltung 8 kann aber auch so ausgebildet sein, daß sie nur die Übereinstimmung zweier "1"-Signale oder daß sie nur die Ülibereinstimmung zweier "O"-Signale an ihren Eingängen durch einen ausgangsimpuls angibt. Der Zähler 10, der vor Beginn jedes Auslesezyklus, also in den Austastlücken 49, auf Null rückgesetzt wird, zählt dann die Anzahl der Übereinstimmungen innerhalb eines solchen Zyklus.

Hierbei wird der Zähler 10 allerdings nur während eines Teils jedes Auslesezyklus wirksam geschaltet, der durch einen von 16 abgegebene Impule ØF, z.B. ØF1 und ØF2, be4stimmt wird. Nimmt man an, daß der Zähler 10 im Auslesezyklus Z1 die Übereinstimmungen innerhalb der Taktperioden $TPR_i$ bis $TPR_k$ zählt, wobei die Differenz k-i etwa n/2 oder 3n/4 beträgt, so zählt er im Auslesezyklus Z2 die Übereinstimmungen innerhalb der Taktperioden $TPR_{(i+1)}'$ bis $TPR_{(k+1)}'$. Betrachtet man die Impulse ØF1 und ØF2 jeweils als "Auslesefenster", so haben sich die Sensorsignale des Schieberegisters 6 im Fenster ØF2 gegenüber dem Fenster ØF1 um eine Signalbreite nach links (Fig. 3) verschoben. Im nächsten Auslesezyklus Z3, in dem der entsprechende Impuls ØF3 dieselben Taktimpulsperioden umfaßt wie in Z2, haben sich dann die Signale von 5 im "Fenster" ØF3 um eine Signalbreite nach rechts verschoben. Wird das "Fenster" generell im ersten Auslesezyklus Z1 und in den weiteren Auslesezyklen Z3, Z5, Z7 usw. um eine Taktperiodenlänge jeweils nach rechts verschoben, so entspricht das einer abwechselnden Verschiebung der an 6a bzw. 5a abgegriffenen Sensorsignalfolgen in dem jeweiligen Fenster ØF um eine Signalbreite nach links bzw. rechts. Diejenigen Impulse ØF, die die vom Zeilenanfang und vom Zeilenende einer der Sensorelementenzeilen abgeleiteten Bewertersignale gleichzeitig unschließen würden, werden vom Taktimpulsgeber 16 unterdrückt. Hierdurch wird erreicht, daß die "Fenster" ØF die Auswertung von denjenigen Sensorsignalen ausschalten, die von den in vertauschter Zuordnung nebeneinander stehenden Anfangs- und Endabschnitten der projizierten Zeilenausschnitte abgeleitet worden sind, so daß sie keine Aussage über den tatsächlichen Helligkeitsverlauf längs des Zeilenausschnitts vermitteln.

Ist das Zählergebnis, das dem Eingang 56 des digitalen Komparators 13 zugeführt wird, größer als das an seinem Eingang 57 liegende digitale Signal, so werden die Steuereingänge der Schalter 14 und 29 mit einem Komparatorsignal beaufschlagt, so daß beide Schalter die an ihre Eingänge gelegten Signale an den jeweiligen Ausgang übertragen. Nachdem das Zählergebnis der Übereinstimmungen des ersten Informationszyklus Z1 als erstes digitales Signal dem Speicher 15 und über diesen dem Eingang 57 des Komparators zugeführt wird, wird danach nur noch ein solches Zählergebnis eines weiteren Informationszyklus Zi in den Speicher 15 übernommen, das größer ist als das größte jeweils zuvor gespeicherte. Die am Ende der Informationszyklen Z1, Z2 und so weiter auftretenden Verschiebeimpulse P1, P2 usw. werden im Zähler 28 gezählt. Da der Schalter 29 synchron mit dem Schalter 14 betätigt wird, überträgt er immer beim Auftreten eines größeren Zählergebnisses im Zähler 10 den jeweiligen Zählerstand von 28 auf den Speicher 30. Damit ist im Speicher 30 nach n Informationszyklen die Anzahl der Verschiebeimpulse Pi gespeichert, die diejenige Informationsverschiebung zwischen den Sensorsignalen der Schieberegister 5 und 6 kennzeichnet, bei der die größte Anzahl von Übereinstimmungen auftritt. Mit anderen Worten: die Anzahl der im Speicher 30 gespeicherten Schiebeimpulse Pi gibt diejenige relative Verschiebung der in den Schieberegistern 5 und 6 umlaufenden Sensorsignale ab, bei der eine maximale Korrelation der miteinander verglichenen Sensorsignale besteht. Die in Fig. 3 angedeuteten Austastlücken 49, die z.B. zum jeweiligen Rücksetzen des Zählers 10 auf Null erforderlich sind, werden durch eine entsprechende Sperrung der Torschaltungen 19 und 20 über ihre Steuerleitungen 23 und 24 erzeugt.

Das am Ausgang 33 des Speichers 30 auftretende digitale Signal wird einer Vorrichtung 34 zugeführt, die als eine Anzeigevorrichtung aufgefaßt werden kann, die nach einer entsprechenden Codierung des digitalen Signals eine digitale oder analoge Anzeige der Entfernung des Gegenstandes liefert. Andererseits kann die Vorrichtung 34 auch aus einer an sich bekannten Einstellvorrichtung einer fotografischen oder elektronischen Kamera bestehen, die den Abstand eines gegenüber einer Bildebene bewegbaren Objektivs so einstellt, daß der Gegenstand auf diese Bildebene scharf abgebildet wird. Eine Vorrichtung dieser Art ist beispielsweise in der Zeitschrift "Electronics" vom 10. Nov. 1977 auf den Seiten 40 bis 44 beschrieben.

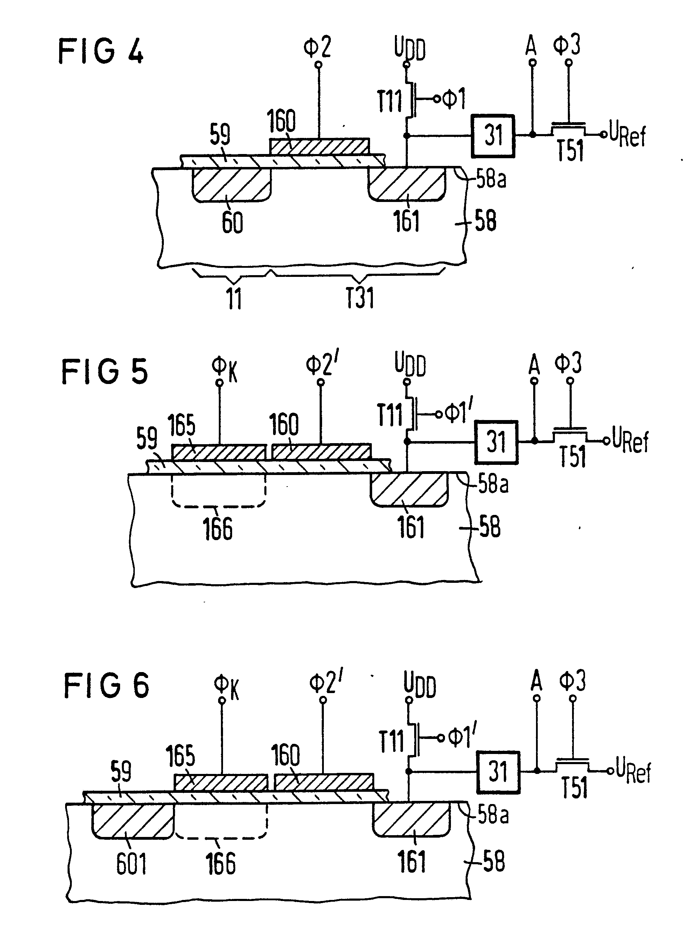

Fig. 4 zeigt eine bevorzugte schaltungstechnische Ausbildung der Sensorelemente 11...1n und 21...2n sowie der angrenzenden Schaltungsteile anhand des Sensorelementes 11. Auf einem dotierten Halbleiterkörper 58, z.B. aus p-dotiertem Silizium, ist eine dünne, elektrisch isolierende Schicht 59, z.B. aus $SiO_2$, vorgesehen. Der Bildsensor 11 ist hierbei als eine Fotodiode ausgebildet, die aus dem n-dotieren Halbleitergebiet 60 besteht. Dieses Gebiet bildet gleichzeitig auch das Source-Gebiet des Transistors T31. Das Gate von T31 ist auf der isolierenden Schicht 59 angeordnet und mit 160 bezeichnet. Das Drain-Gebiet von T31 trägt das Bezugszeichen 161. Dieses Gebiet ist einerseits über den Transistor T11 mit einem Anschluß verbunden, der mit der Konstantspannung $U_{DD}$ beschaltet ist und ist weiterhin mit dem Eingang des Bewerters 31 verbunden. Die Schaltungsteile T51 und A sind bereits anhand von Fig. 2 beschrieben.

Eine alternative Schaltung zu Fig. 4 zeigt Fig. 5. Danach besteht das Sensorelement 11 aus einem MIS-Kondensator (Metall-Isolierschicht-Halbleiter-Kondensator), der ein Gate 165 besitzt, das auf der Isolierschicht 59 angeordnet ist. Das Gate 165 ist z.B. aus hochdotiertem polykristallinem Silizium gefertigt und liegt an einer Taktimpulsspannung ØK, unter deren Einfluß sich eine Raumladungszone 166 im Halbleiterkörper 58 ausbildet. Die weiteren Schaltungsteile von Fig. 5 entsprechen den mit gleichen Bezugszeichen versehenen Schaltungsteilen von Fig. 4, wobei darauf hingewiesen sei, daß der Transistor T11 mit einer Taktimpulsspannung Ø1' und der Transistor T31 mit einer Taktimpulsspannung Ø2' belegt ist. Die

gleichzeitig beginnenden Taktimpulse Ø1', Ø2' und ØK bewirken bis zum Zeitpunkt t1 ein Rücksetzen des MIS-Kondensators im Bereich der Grenzfläche 58a des Halbleiterkörpers 58 etwa auf den Wert der Versorgungsspannung $U_{DD}$. Zum Zeitpunkt t1 beginnt in dem weiterhin mit ØK beaufschlagten MIS-Kondensator die Integrationszeit, in der optisch erzeugte Ladungsträger gesammelt werden. Mit dem Ende von ØK zum Zeitpunkt t2' ist auch das Ende der Integrationszeit erreicht. Kurz vor dem Zeitpunkt t2' wird ein neuer Taktimpuls Ø2' angelegt, so daß eine durch den Pfeil 504 (Fig. 3) angedeutete Ladungsübernahme von 166 nach 161 stattfinden kann, die am Eingang des Bewerters eine entsprechende Potentialänderung hervorruft. Der Taktimpuls Ø1' muß, wie in Fig. 3 angedeutet ist, vor dieser Ladungsübernahme abgeschaltet werden.

Fig. 6 unterscheidet sich von Fig. 5 lediglich dadurch, daß eine Fotodiode 601 neben dem MIS-Kondensator 165, 166 angeordnet ist, und zwar auf der von T31 abgewandten Seite desselben. Die Gateelektrode von T31 ist mit der Impulsspannung Ø2' beschaltet, während der Gateelektrode von T11 die Taktimpulsspannung Ø1' zugeführt wird.

Die Kapazität des Sensorelements 11 nach Fig. 5 ist größer als die Kapazität des Sensorelements nach Fig. 4, während die Kapazität des Sensorelements 11 nach Fig. 6 größer ist als die des Sensorelementes nach Fig. 5.

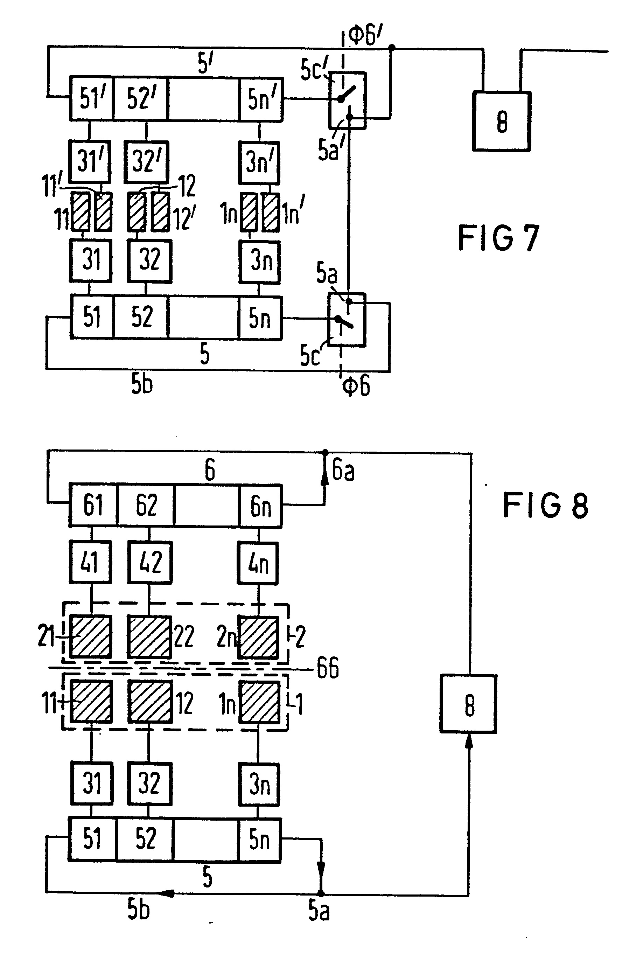

In Fig. 7 ist ein zweites Ausführungsbeispiel der Erfindung dargestellt, bei dem zwei Schaltungen nach Fig. 1 mit einem gemeinsamen Auswerteteil 7 und gemeinsamen, diesem nachgeschalteten Vorrichtungen 34 vorgesehen sind. Die Bestandteile der in Fig. 1 linksseitig vom Auswerteteil 7 angeordneten Teilschaltung sind in Fig. 7 mit denselben Bezugszeichen versehen. Dabei sind die einzelnen Sensorelemente 11, 12...1n in Längsrichtung des Bildsensors 1 so schmal ausgebildet, daß sie etwa der halben Abmessung der Bewerter 31, 32...3n entsprechen. In diese Bewerter wurden der einfachen Darstellung wegen auch die Schalttransistoren T11, T31 sowie T61 usw. einbezogen. Die entsprechenden Bestandteile der zweiten Schaltung nach Fig. 1 sind in Fig. 7 jeweils mit Bezugszeichen versehen, die durch einen Strich ergänzt sind. Wie ersichtlich ist, sind die Sensorelemente 11, 12...1n des einen Bildsensors in den Lücken zwischen den Sensorelementen 11', 12'...1n' des anderen Bildsensors angeordnet. Bei diesem Ausführungsbeispiel kann auf einer der Fig. 1 entsprechenden Sensorlänge die doppelte Anzahl von Sensorelementen untergebracht werden, so daß die Auflösung der auf die Sensorelemente projizierten Zeilenausschnitte wesentlich größer ist als in Fig. 1. Um eine gegenseitige Störung des Informationsumlaufes in den Schieberegistern 5 und 5' zu verhindern, sind alternierend betätigbare elektronische Schalter 5c und 5c' vorgesehen, die wechselweise einen der Ausgänge 5a und 5a' mit dem einen Eingang der logischen Schaltung 8 und mit dem Eingang der betreffenden ersten Stufe 51 bzw. 51' der Schieberegister verbinden. Sie werden mittels Taktimpulsspannungen Ø6 und Ø6' angesteuert. Die einzelnen Taktperioden von Ø6 sind durch Zwischenperioden voneinander getrennt, die gleiche Länge aufweisen wie die Taktperioden. Mit diesen Zwischenperioden fallen dann die Taktperioden von Ø6' zusammen. Die in Fig. 7 dargestellte Schaltung ist rechtsseitig von dem Auswerteteil 7 durch eine entsprechende Anordnung zweier weiterer Bildsensoren und der ihnen zugeordneten Bewerter und Schieberegister zu ergänzen, wobei ihre Sensorelemente ebenfalls so schmal ausgebildet sind, daß sie der in Längsrichtung der Bildsensoren gesehenen halben Bewerterbreite entsprechen.

Fig. 8 zeigt schließlich eine der Fig. 1 entsprechende Schaltung, bei der die Bildsensoren 1 und 2 nebeneinander angeordnet sind, so daß ihre Sensorelemente 11, 12...1n und 21, 22...2n in zwei nebeneinander liegenden Zeilen angeordnet sind. Die Bewerter 31, 32...3n und 41, 42...4n enthalten jeweils auch die Schalttransistoren T11, T21, T31 und T41 sowie T61 und T71 usw. Dieses Ausführungsbeispiel kann herangezogen werden, wenn die Abbildungen des Gegenstandes jeweils nur zur Hälfte auf die Ebene der Bildsensoren von 1 und 2 projiziert werden, wobei die obere Hälfte der einen Abbildung auf den Teil der Bildebene fällt, der oberhalb der Schnittlinie 66 liegt, während die untere Hälfte der anderen Abbildung auf den unterhalb der Schnittlinie 66 liegenden Teil der Bildebene projiziert wird. Die mittels der Bildsensoren 1 und 2 ausgewerteten Zeilenausschnitte liegen dabei an den jeweiligen Grenzen der Abbildungshälften, die der Linie 66 benachbart sind.

Die beschriebenen und dargestellten Schaltungen kommen mit besonderem Vorteil ganz oder teilweise auf einem dotierten Halbleiterkörper monolithisch integriert werden. Dabei ist der Halbleiterkörper, z.B. 58, vorzugsweise p-leitend ausgebildet und der übrige Schaltungsaufbau in MOS-n-Kanal-Technik ausgeführt. Der Halbleiterkörper liegt auf einem Bezugspotential, wobei die angegebenen Spannungen und Potentiale gegenüber diesem jeweils ein positives Vorzeichen aufweisen. Bei einen n-leitenden Halbleiterkörper und einer MOS-p-Kanal-Technik werden diese Vorzeichen negativ. Die beschriebenen und dargestellten Ausführungsbeispiele weisen im Bereich der Bildsensoren 1 und 2 Blenden auf, in denen Öffnungen vorgesehen sind, durch die eine Belichtung der Sensorelemente erfolgt.

**Patentansprüche**

1. Schaltung zur sensorgesteuerten Entfernungsmessung mit zwei linearen, mit Sensorelementen (11.., 21..) bestückten Bildsensoren (1, 2), auf die Ausschnitte einander entsprechender Zeilen zweier von einem Gegenstand getrennt erhaltener Abbildungen projiziert werden, mit einer den Sensorelementen nachgeschalteten Bewertungseinrichtung (31.., 41..), die in Abhängigkeit vom Überschreiten einer Bezugsladung in den Sensorelementen für jedes Sensorsignal zwischen zwei unterschiedlichen Schaltzuständen umschaltbar ist, mit einem Auswerteteil (7), der die in der Bewertungseinrichtung digitalisierten Sensorsignale in Abhängigkeit von unterschiedlichen relativen Positionsverschiebungen bezüglich einer maximalen Korrelation auswertet, wobei dem Auswerteteil eine die Entfernung des Gegenstandes anzeigende Vorrichtung (34) oder eine Vorrichtung zur Scharfeinstellung der Abbildung des Gegenstandes auf eine Bildebene nachgeschaltet ist, und mit zwei der Bewertungseinrichtung nachgeschalteten, den Bildsensoren individuell zugeordneten Schieberegistern (5, 6), wobei für eine serielle Ausgabe der bewerteten Sensorsignale (S11.., S21..) die letzten Stufen der Schieberegister (5, 6) mit Ausgängen (5a, 6a) versehen sind, die einerseits an die Eingänge der ersten Stufen (51, 61) rückgekoppelt und andererseits mit Eingängen des Auswerteteils (7) verbunden sind, dadurch gekennzeichnet, daß die Bewertungseinrichtung aus einer Anzahl von jeweils zwischen zwei unterschiedlichen Schaltzuständen umschaltbaren Bewertern (31.., 41..) besteht, wobei jedem Sensorelement (11.., 21..) der beiden Bildsensoren (1, 2) ein solcher Bewerter (31.., 41..) zugeordnet ist, daß die Ausgänge der Bewerter über jeweils einen Transfertransistor (T61.., T71..) an die Eingänge der den einzelnen Bewertern zugeordneten Stufen (51.., 61..) der Schieberegister (5, 6) geschaltet sind; daß die Bewerter (31.., 41..) jeweils einen Eingang (37) haben, der über einen Schalttransistor (T11.., T21..) mit einer Versorgungsspannungsquelle ($U_{DD}$) verbunden ist und daß die Bewerter (31.., 41..) jeweils einen weiteren Eingang (38) aufweisen, der über einen weiteren Schalttransistor (T51.., T52..) mit einer Referenzspannungsquelle ($U_{Ref}$) verbunden ist.

2. Schaltung nach Anspruch 1, gekennzeichnet durch einen mit den Takteingängen der Schieberegister (5, 6) verbundenen Taktimpulsgeber (16), der so ausgebildet ist, daß nach jedem Informationsumlauf in beiden Schieberegistern (5, 6) eines derselben mit einer zusätzlichen Taktperiode (TPLz) beaufschlagt wird, so daß es gegenüber dem anderen eine Informationsverschiebung um eine Stufe erfährt.

3. Schaltung nach Anspruch 2, dadurch gekennzeichnet, daß der Auswerteteil (7) eine eingangsseitige logische Schaltung (8) enthält, der ein erster Zähler (10) nachgeschaltet ist, daß der Ausgang des ersten Zählers (10) einerseits mit dem ersten Eingang (56) eines digitalen Komparators (13) und andererseits über einen elektronischen Schalter (14) und einen Speicher (15) mit dem zweiten Eingang (57) des Komparators (13) verbunden ist, daß ein zweiter Zähler (28) an einen weiteren Ausgang (25) des Taktimpulsgebers (16) geschaltet ist, an dem die Taktimpulse der zusätzlichen Taktperiode (TPLz) oder von diesen abgeleitete Impulse abgreifbar sind, daß der Ausgang des zweiten Zählers (28) über einen zweiten elektronischen Schalter (29) mit einem zweiten Speicher (30) verbunden ist, daß beide elektronischen Schalter (14, 29) mit Steuereingängen versehen sind, die an den Ausgang des Komparators (13) geschaltet sind, und daß der Ausgang des zweiten Speichers (30) mit dem Ausgang (33) des Auswerteteils (7) verbunden ist.

4. Schaltung zur sensorgesteuerten Entfernungsmessung, bestehend aus zwei Schaltungen nach Anspruch 1 mit einem gemeinsamen Auswerteteil und gemeinsamen, diesem nachgeschalteten Vorrichtungen, dadurch gekennzeichnet, daß einander entsprechende Bildsensoren der ersten und zweiten Schaltung nach Anspruch 1 jeweils zu Sensorkombinationen zusammengefaßt sind, daß die Sensorelemente (11..) jedes Bildsensors in Längsrichtung desselben so bemessen sind, daß sie etwa der halben Bewerterabmessung (31..) in dieser Richtung entsprechen, daß die Sensorelemente (12) eines Bildsensors der ersten Schaltung nach Anspruch 1 jeweils in den Lücken zwischen den Sensorelementen (11', 12') des mit diesem zusammengefaßten, entsprechenden Bildsensors der zweiten Schaltung nach Anspruch 1 angeordnet sind und daß die letzten Stufen der Schieberegister (5n, 5n') der jeweils zu einer Sensorkombination zusammengefaßten Bildsensoren mit ausgangsseitigen, alternativ betätigbaren elektronischen Schaltern (5c, 5c') versehen sind.

5. Schaltung nach einem der Ansprüche 1 bis 3, dadurch gekennzeichnet, daß die beiden Bildsensoren (1, 2) parallel nebeneinander angeordnet sind und die Bewerterschaltungen (31, 41) und Schieberegister (5, 6) jeweils auf der Seite des zugeordneten Bildsensors (1, 2) liegen.

6. Schaltung nach einem der Ansprüche 1 bis 5, dadurch gekennzeichnet, daß die Sensorelemente (11..., 21...) als Fotodioden (60) ausgebildet sind.

7. Schaltung nach einem der Ansprüche 1 bis 5, dadurch gekennzeichnet, daß die Sensorelemente (11..., 21...) als MIS-Kondensatoren (165, 166) ausgebildet sind.

8. Schaltung nach einem der Ansprüche 1 bis 5, dadurch gekennzeichnet, daß die Sensorelemente (11..., 21...) aus MIS-Kondensatoren (165, 166) bestehen, zu denen Fotodioden (601) benachbart angeordnet sind.

9. Schaltung nach einem der Ansprüche 1 bis 8, dadurch gekennzeichnet, daß sie mit Ausnahme der dem Auswerteteil (7) nachgeschalteten Vorrichtungen (34) ganz oder teilweise auf einem dotierten Halbleiterkörper (58) monolithisch integriert ist.

10. Schaltung zur sensorgesteuerten Entfernungsmessung mit zwei linearen, mit Sensorelementen (11.., 21..) bestückten Bildsensoren (1, 2), auf die Ausschnitte einander entsprechender Zeilen zweier von einem Gegenstand getrennt erhaltener Abbildungen projiziert werden, mit einer den Sensorelementen nachgeschalteten Bewertungseinrichtung (31..., 41...), die in Abhängigkeit vom Überschreiten einer Bezugsladung in den Sensorelementen für jedes Sensorsignal zwischen zwei unterschiedlichen Schaltzuständen umschaltbar ist, mit einem Auswerteteil (7), der die in der Bewertungsseinrichtung digitalisierten Sensorsignale in Abhängigkeit von unterschiedlichen relativen Positionsverschiebungen bezüglich einer maximalen Korrelation auswertet, wobei dem Auswerteteil eine die Entfernung des Gegenstandes anzeigende Vorrichtung (34) oder eine Vorrichtung zur Scharfeinstellung der Abbildung des Gegenstandes auf eine Bildebene nachgeschaltet ist, und mit zwei der Bewertungseinrichtung nachgeschalteten, den Bildsensoren individuell zugeordneten Schieberegistern (5, 6), wobei für eine serielle Ausgabe der bewerteten Sensorsignale (S11.., S21..) die letzten Stufen der Schieberegister (5, 6) mit Ausgängen (5a, 6a) versehen sind, die einerseits an die Eingänge der ersten Stufen (51, 61) rückgekoppelt und andererseits mit Eingängen des Auswerteteils (7) verbunden sind, bei der die Bewertungseinrichtung aus einer Anzahl von jeweils zwischen zwei unterschiedlichen Schaltzuständen umschaltbaren Bewertern (31.., 41..) besteht, wobei jedem Sensorelement (11.., 21..) der beiden Bildsensoren (1, 2) ein solcher Bewerter (31.., 41..) zugeordnet ist, bei der die Ausgänge der Bewerter über jeweils einen Transfertransistor (T61.., T71..) an die Eingänge der den einzelnen Bewertern zugeordneten Stufen (51.., 61..) der Schieberegister (5, 6) geschaltet sind; bei der die Bewerter (31..., 41...) jeweils einen Eingang (37) haben, der über einen Schalttransistor (T11.., T21...) mit einer Versorgungsspannungsquelle ($U_{DD}$) verbunden ist und bei der die Bewerter (31..., 41..) jeweils einen weiteren Eingang (38) aufweisen, der über einen weiteren Schalttransistor (T51.., T52...) mit einer Referenzspannungsquelle ($U_{Ref}$) verbunden ist, gekennzeichnet durch die Verwendung in einer fotografischen oder elektronischen Kamera.

**Claims**

1. A sensor-controlled range measurement circuit comprising two linear image sensors (1,2) equipped with sensor elements (11...,21...) onto which are projected mutually corresponding row-sections of two images separately obtained from an object, with an evaluating device (31...,41...) connected following the sensor elements which can be switched over between two different switching states in dependence upon the overshooting of a reference charge in the sensor elements for each sensor signal, with an analysis component (7) which analyses the sensor signals digitalised in the evaluating device in dependence upon different relative position shifts in relation to a maximum correlation, the analysis component being followed by a device (34) which displays the range of the object or by a device which focusses the image of the object onto a focal plane, and with two shift registers (5,6) connected following the evaluation device and individually assigned to the image sensors, whereby for a series output of evaluated sensor signals (S11...,S21...) the last stages of the shift registers (5,6) are provided with outputs (5a,6a) which on the one hand are fed back to the inputs of the first stages (51,61) and on the other hand are connected to inputs of the analysis component (7), characterised in that the evaluating device consists of a number of evaluators (31...,41...), each of which can be switched over between two different switching states, each sensor element (11...,21...) of the two image sensors (1,2) being assigned an evaluator (31...,41...) of this kind, that the outputs of the evaluators are each connected via a transfer transistor (T61..,T71..) to the inputs of the stages (51..,61..) assigned to the individual evaluators of the shift registers (5,6); that the evaluators (31..,41..) each have an input (37) connected via a switching transistor (T11..,T21..) to a supply voltage source ($U_{DD}$) and that the evaluators (31..,41..) each have a further input (38) connected via a further switching transistor (T51..,T52..) to a reference voltage source ($U_{Ref}$).

2. A circuit as claimed in Claim 1, characterised by a clock-pulse generator (16) connected to the clock inputs of the shift registers (5,6) and designed such that following each circulation of information in the two shift registers (5,6), one thereof is subjected to an additional clock period (TPLz) so that it undergoes an information shift of one stage in comparison to the other shift register.

3. A circuit as claimed in Claim 2, characterised in that the analysis component (7) contains an input-end logic circuit (8) followed by a first counter (10), that the output of the first counter (10) is connected on the one hand to the first input (56) of a digital comparator (13) and on the other hand, via an electronic switch (14) and a store (15), to the second input (57) of the comparator (13), that a second counter (28) is connected to a further output (25) of the clock-pulse generator (16) from which the clock pulses of the additional clock period (TPLz) or pulses derived therefrom can be tapped, that the output of the second counter (28) is connected via a second electronic switch (29) to a second store (30), that both the electronic switches (14,29) are provided with control inputs connected to the output of the comparator (13) and that the output of the second store (30) is connected to the output (33) of the analysis component (7).

4. A sensor-controlled range measurement circuit, consisting of two circuits as claimed in Claim 1 with a common analysis component and common devices connected following the analysis component, characterised in that mutually-corresponding image sensors of the first and second circuits as claimed in Claim 1 are in each case combined to form sensor combinations, that the sensor elements (11..) of each image sensor are dimensioned in the longitudinal direction thereof such that they correspond approximately to half the dimensions of the evaluator (31..) in this direction, that the sensor elements (12) of an image sensor of the first circuit as claimed in Claim 1 are each arranged in the gaps between the sensor elem ents (11',12') of the corresponding image sensor of the second circuit as claimed in Claim 1 that is combined therewith and that the last stages of the shift registers (5n,5n') of the image sensors which have been combined to form a sensor combination are provided with outputs having alternatively operable electronic switches (5c,5c').

5. A circuit as claimed in one of Claims 1 to 3, characterised in that the two image sensors (1,2) are arranged in parallel, one beside another, and the evaluator circuits (31,41) and shift registers (5,6) are each arranged at the side of the assigned image sensor (1,2).

6. A circuit as claimed in one of Claims 1 to 5, characterised in that the sensor elements (11..,21..) consist of photo-diodes (60).

7. A circuit as claimed in one of Claims 1 to 5, characterised in that the sensor elements (11..,21..) are MIS-capacitors (165,166).

8. A circuit as claimed in one of Claims 1 to 5, characterised in that the sensor elements (1 1..,21..) consist of MIS-capacitors (165,166) adjacent to which are arranged photo-diodes (601).

9. A circuit as claimed in one of Claims 1 to 8, characterised in that it is entirely or partially monolithically integrated on a doped semiconductor body (58), except for the devices (34) which follow the analysis component (7).

10. A sensor-controlled range measurement circuit, comprising two linear image sensors (1,2) equipped with sensor elements (11..,21..) onto which are projected mutually corresponding row-sections of two images separately obtained from an object, comprising an evaluating device (31...,41...) connected following the sensor elements and which can be switched over between two different switching states in dependence upon the overshooting of a reference charge in the sensor elements for each sensor signal, an analysis component (7) which analyses the sensor signals digitallised in the evaluating device in dependence upon different relative position shifts relative to a maximum correlation, the analysis component being followed by a device (34) which displays the range of the object or by a device which focusses the image of the object onto a focussing plane, and comprising two shift registers (5,6) connected following the evaluation device and individually assigned to the image sensors, where, for the series output of the evaluated sensor signals (S11..,S21..), the last stages of the shift registers (5,6) are provided with outputs (5a,6a) which on the one hand are fed back to the inputs of the first stages (51,61) and on the other hand are connected to inputs of the analysis component (7), where the evaluating device consists of a number of evaluators (31..,41..), each of which can be switched over between two different switching states, where each sensor element (11..,21..) of the two image sensors (1,2) is assigned an evaluator (31..,41..) of this kind, where the outputs of the evaluators are each connected via a transfer transistor (T61..,T71..) to the inputs of the stages (51..,61..) assigned to the individual evaluators of the shift registers (5,6); where the evaluators (31..,41..) each have an input (37) connected via a switching transistor (T11..,T21..) to a supply voltage source ($U_{DD}$) and where the evaluators (31..,41..) each have a further input (38) connected via a further switching transistor (T51..,T52..) to a reference voltage source ($U_{Ref}$), characterised by the use thereof in a photographic or electronic camera.

**Revendications**

1. Montage pour la télémétrie commandée par capteur, avec deux capteurs d'image linéaires (1, 2) munis d'éléments capteurs (11.., 21..), sur lesquels sont projetées des sections de lignes mutuellement correspondantes de deux images obtenues séparément d'un objet, avec un dispositif de pondération (31.., 41..) monté à la suite des éléments capteurs, qui est commutable entre deux etats de commutation différents, en fonction du dépassement d'une charge de référence dans les éléments capteurs pour chaque signal de capteur, avec une partie d'évaluation (7) qui évalue les signaux de capteur, numérisés dans le dispositif de pondération, en fonction de décalages relatifs différents de positions par rapport à une corrélation maximale, la partie d'évaluation étant suivie d'un dispositif (34) affichant l'éloignement de l'objet, ou d'un dispositif pour la mise au point de la représentation de l'objet dans un plan d'image, et avec deux registres à décalage (5, 6) montés à la suite du dispositif de pondération et coordonnés individuellement aux capteurs d'image, les derniers étages des registres à décalage (5, 6) étant munis, en vue de la délivrance sérielle des signaux de capteur pondérés (S11.., S21..), de sorties (5a, 6a) qui, d'une part, sont connectées en rétroaction aux entrées des premiers étages (51, 61) et, d'autre part, sont connectées à des entrées de la partie d'évaluation (7), <u>caractérisé en ce que</u> le dispositif de pondération est constitué d'un certain nombre de pondérateurs (31.., 41..) commutables chacun entre deux états de commutation différents, un tel pondérateur (31.., 41..) étant coordonné à chaque élément capteur (11.., 21..) des deux capteurs d'image (1, 2), que les sorties des pondérateurs sont reliées chacune à travers un transistor de transfert (T61.., T71..) aux entrées des étages (51.., 61..) des registres à décalage (5, 6) coordonnés aux différents pondérateurs; que les pondérateurs (31.., 41..) possèdent chacun une entrée (37) reliée à travers un transistor de commutation (T11.., T21..) à une source de tension d'alimentation ($U_{DD}$) et que les pondérateurs (31.., 41..) possèdent chacun une autre entrée (38) reliée à travers un autre transistor de commutation (T51.., T52..) à une source de tension de référence ($U_{Ref}$).

2. Montage selon la revendication 1, caractérisé par un générateur d'impulsions d'horloge (16), connecté aux entrées d'horloge des registres à décalage (5, 6), qui est réalisé de manière qu'après chaque révolution de l'information dans les deux registres à décalage (5, 6), une période d'horloge (TPLz) supplémentaire soit appliquée à l'un de ces registres, de sorte qu'il subit un décalage de l'information d'un étage par rapport à l'autre.

3. Montage selon la revendication 2, caractérisé en ce que la partie d'évaluation (7) contient, côté entrée, un circuit logique (8) suivi d'un premier compteur (10), que la sortie du premier compteur (10) est connectée d'une part à la première entrée (56) d'un comparateur numérique (13) et d'autre part, à travers un interrupteur électronique (14) et une mémoire (15), à la deuxième entrée (57) du comparateur (13), qu'un second compteur (28) est connecté à une autre sortie (25) du générateur d'impulsions d'horloge (16), sur laquelle peuvent être prélevées les impulsions d'horloge de la période d'horloge (TPLz) supplémentaire, ou des impulsions dérivées de celles-ci, que la sortie du second compteur (28) est connectée à travers un deuxième interrupteur électronique (29) à une deuxième mémoire (30), que les deux interrupteurs électroniques (14, 29) sont dotés d'entrées de commande connectées à la sortie du comparateur (13) et que la sortie de la deuxième mémoire (30) est reliée à la sortie (33) de la partie d'évaluation (7).

4. Montage pour la télémétrie commandée par capteur, constitué de deux montages selon la revendication 1 avec une partie d'évaluation commune et des dispositifs communs montés à la suite de celle-ci, caractérisé en ce que des capteurs d'image mutuellement correspondants du premier et du deuxième montage selon la revendication 1 sont chaque fois réunis en une combinaison de capteurs, que les éléments capteurs (11..) de chaque capteur d'image sont dimensionnés, dans les sens de la longueur de ce capteur, de manière qu'ils correspondent approximativement à la moitié de la dimension du pondérateur (31..) dans ce sens, que les éléments capteurs (12) d'un capteur d'image du premier montage selon la revendication 1 sont disposés chaque fois dans les intervalles des éléments capteurs (11', 12') du capteur d'image correspondant combiné à lui du deuxième montage selon la revendication 1 et que les derniers étages des registres à décalage (5n, 5n') des capteurs d'image réunis en une combinaison de capteurs sont pourvus, côté sortie, d'interrupteurs électroniques (5c, 5c') pouvant être actionnés alternativement.

5. Montage selon une des revendications 1 à 3, caractérisé en ce que les deux capteurs d'image (1, 2) sont disposés parallèlement l'un à côté de l'autre et les circuits des pondérateurs (31, 41) et les registres à décalage (5, 6) sont situés chaque fois sur le côté du capteur d'image (1, 2) auquel ils sont coordonnés.

6. Montage selon l'une des revendications 1 à 5, caractérisé en ce que les éléments capteurs (11..., 21...) sont réalisés comme des photodiodes (60).

7. Montage selon une des revendications 1 à 5, caractérisé en ce que les éléments capteurs (11...,21...) sont réalisés comme des condensateurs MIS (165, 166).

8. Montage selon l'une des revendications 1 à 5, caractérisé en ce que les éléments capteurs 11..., 21...) sont constitués de condensateurs MIS (165, 166) auxquels sont coordonnées des photodiodes (601) disposées à proximité d'eux.

9. Montage selon une des revendications 1 à 6, caractérisé en ce qu'il est intégré monolithiquement, en totalité ou en partie, sur un substrat semi-conducteur dopé (58), à l'exception des dispositifs (34) montés à la suite de la partie d'évaluation (7).

10. Montage pour la télémétrie commandée par capteur, avec deux capteurs d'image linéaires (1, 2) munis d'éléments capteurs (11.., 21..), sur lesquels sont projetées des sections de lignes mutuellement correspondantes de deux images obtenues séparément d'un objet, avec un dispositif de pondération (31.., 41..) monté à la suite des éléments capteurs, qui est commutable entre deux états de commutation différents, en fonction du dépassement d'une charge de référence dans les éléments capteurs pour chaque signal de capteur, avec une partie d'évaluation (7) qui évalue les signaux de capteur, numérisés dans le dispositif de pondération, en fonction de décalages relatifs différents de positions par rapport à une corrélation maximale, la partie d'évaluation étant suivie d'un dispositif (34) affichant l'éloignement de l'objet, ou d'un dispositif pour la mise au point de la représentation de l'objet dans un plan d'image, et avec deux registres à décalage (5, 6) montés à la suite du dispositif de pondération et coordonnés individuellement aux capteurs d'image, les derniers étages des registres à décalage (5, 6) étant munis, en vue de la délivrance sérielle des signaux de capteur pondérés (S11.., S21), de sorties (5a, 6a) qui, d'une part, sont connectées en rétroaction aux entrées des premiers étages (51, 61) et, d'autre part, sont connectées à des entrées de la partie d'évaluation (7), montage dans lequel le dispositif de pondération est constitué d'un certain nombre de pondérateurs (31..., 41...)commutables chacun entre deux états de commutation différents, un tel pondérateur (31..., 41..) étant coordonné à chaque élément capteur (11.., 21..) des deux capteurs d'image, dans lequel les sorties des pondérateurs sont reliées chacune à travers un transistor de transfert (T61.., T71..) aux entrées des étages (51.., 61..) des registres à décalage (5, 6) coordonnés aux différents pondérateurs; dans lequel les pondérateurs (31..., 41...) possèdent chacun une entrée (37) reliée à travers un transistor de commutation (T11.., T21...) à une source de tension d'alimentation ($U_{DD}$) et dans lequel les pondérateurs (31..., 41...) possèdent chacun une autre entrée (38) reliée à travers un autre transistor de commutation (T51.., T52...) à une source de tension de référence ($U_{Ref}$), caractérisé par son utilisation dans une caméra photographique ou électronique.

FIG 1

# FIG 2

# FIG 3

**FIG 4**

$\Phi 2$     $U_{DD}$     A   $\Phi 3$

T11    o$\Phi 1$

59   160    31      $U_{Ref}$

T51

58a

60     161    58

11    T31

**FIG 5**

$\Phi K$     $\Phi 2'$     $U_{DD}$    A   $\Phi 3$

T11   o$\Phi 1'$

59   165    160     31     $U_{Ref}$

T51

166    161    58a   58

**FIG 6**

$\Phi K$     $\Phi 2'$     $U_{DD}$    A   $\Phi 3$

T11   o$\Phi 1'$

59   165    160     31     $U_{Ref}$

T51

601    166    161    58a   58

0 025 174

FIG 7

FIG 8

9